Europäisches Patentamt

European Patent Office

Office européen des brevets

(11) Publication number: **0 327 972 B1**

# EUROPEAN PATENT SPECIFICATION

(45) Date of publication of patent specification: **23.12.92**  (51) Int. Cl.⁵: **G01F 15/18**

(21) Application number: **89101827.7**

(22) Date of filing: **02.02.89**

(54) **Improvements in or relating to valves.**

(30) Priority: **09.02.88 GB 8802869**

(43) Date of publication of application:
**16.08.89 Bulletin 89/33**

(45) Publication of the grant of the patent:
**23.12.92 Bulletin 92/52**

(84) Designated Contracting States:
**AT BE CH DE ES FR GB GR IT LI LU NL SE**

(56) References cited:
**EP-A- 0 061 908**
**EP-A- 0 064 331**
**EP-A- 0 105 758**
**EP-A- 0 210 933**

(73) Proprietor: **Glynwed Tubes & Fittings Limited**
**Walsall Road Norton Canes**
**Cannock Staffordshire WS11 3NS(GB)**

(72) Inventor: **Marklew, David Sydney**
**45 Belvedere Close**
**Chasetown Walsall WS7 8YR(GB)**

(74) Representative: **Lesley, Sheila F. et al**
**FORRESTER & BOEHMERT Franz-**
**Joseph-Strasse 38**
**W-8000 München 40(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

THIS INVENTION relates to valves and is particularly, but not exclusively, relevant to valves of the kind used in water supply systems for cutting off, when necessary, the supply of water from a water main to domestic or commercial premises. Such a valve is herein referred to as a cut-off valve. Such valves are commonly, with the pipelines in which they are fitted, located underground and are operable by a suitable tool introduced through a vertical passage extending to the surface from the valve.

In many installations it is necessary to meter the flow of water over a period to premises, for example where a charge is made by the water company on the basis of total consumption of water.

EP-A-0210933 discloses a water meter installation comprising a sealed casing extending into the ground and accommodating, at its lower end, a water meter and meter mounting arrangement comprising a base member connected with inlet and outlet water pipes extending through the wall of the casing and forming part of a water pipe line and a complementary member, detachably connectable with the base member *via* a bayonet fitting and which complementary member carries the water meter. Respective cut-off valves are provided upstream and downstream of the base member, within the casing, and are operable by respective vertical rods extending within the casing upwardly to a position close to the top of the casing. The arrangement disclosed allows the meter, together with the complementary member, to be detached from the base member and lifted from the casing for reading the meter or for other purposes, after closure of the cut-off valves. Respective passages within the base member, connected with the inlet and outlet pipes, lead to respective ports on a upper face of the base member and complementary ports on the lower face of the complementary member lead to passages connected with the water meter whereby, when the complementary member is securely fitted on the base member, the meter is connected in series in the pipe line. The construction of EP0210933, however, requires a casing which is of relatively large diameter with respect to the meter itself.

EP-A-0061908 discloses a water meter and cut-off installation comprising an outer casing which is embedded in the ground and into which pass, adjacent the lower end of the casing, inlet and outlet portions of a water pipe line. Within the casing, the inlet and outlet portions of the pipe line are connected with inlet and outlet passages in a base member, which lead to a mounting for a water meter, one of such passages extending through a cut-off valve spaced from the meter mounting. In EP-A-0061908 also, the provision of the separate meter mounting and cut-off valve requires that the outer casing of the installation be substantially wider than the meter itself.

It is an object of the invention to provide an improved combined cut-off valve and flow metering facility.

According to the invention there is provided a combined cut-off valve and flow metering facility for a water supply comprising a valve, a water meter and an outer casing adapted to be buried in the ground to extend to a surface location, the casing having an opening at its upper end, the valve including a valve body fixed with respect to the casing and the water meter being mounted within the casing and being so arranged as to be capable of being read from the upper end of the casing through said opening, characterised in that said valve is a plug valve comprising a plug rotatable about an axis thereof as a close sealing fit in a cavity in a body encompassing the plug, the body providing at least one inlet passage and at least one outlet passage opening *via* respective ports into the cavity of the body which receives the plug and the plug having respective ports connected with respective internal passages in the plug, the arrangement being such that in one rotational position of the plug in the body, the ports in the plug are in register with the corresponding ports in the cavity in the valve body so that the inlet and outlet passages in the body are in communication with the respective internal passages in the plug, and that, in another position of the plug in the body, at least one of said ports in the plug is out of communication with either of said ports in said cavity, thereby to prevent fluid flow through the valve and further characterised in that the water meter is mounted on top of the plug and is secured to the plug to be rotatable therewith, said ports in the plug being connected with respective internal passages in the plug which connect with inlet and outlet passages respectively of said water meter.

The term "plug valve" as used herein, denotes a valve in which a plug is rotatable about an axis thereof as a close sealing fit in a cavity in a body encompassing the plug, the body providing at least one inlet passage and at least one outlet passage opening *via* respective ports into the cavity of the body which receives the plug and the plug having respective ports connected with respective internal passages in the plug, the arrangement being such that in one rotational position of the plug in the body, the ports in the plug are in register with the corresponding ports in the cavity in the valve body so that the inlet and outlet passages in the body are in communication with the respective internal passages in the plug, and that, in another position of the plug in the body, at least one of said ports in the plug is out of communication with either of said ports in said cavity, thereby to prevent fluid flow through the valve.

Embodiments of the invention are described below by way of example with reference to the accompanying drawings in which:-

FIGURE 1 is a sectional view through a cut-off valve and metering installation for a water supply,

FIGURE 2 is a sectional view through a variant cut-off valve and metering installation,

FIGURE 3 is a sectional view through yet another cut-off valve and metering installation for a water supply,

FIGURE 4 is a sectional view through yet another cut-off valve and metering installation,

FIGURE 5 is a sectional view through a still further cut-off valve and metering installation for a water supply,

FIGURE 6 is a sectional view through a still further cut-off valve and metering installation, and

FIGURE 7 is a sectional view through a cut-off valve for a water supply, and which is adapted for the ready fitting of a metering facility.

In the various drawings of the various embodiments, like references are used to denote like parts.

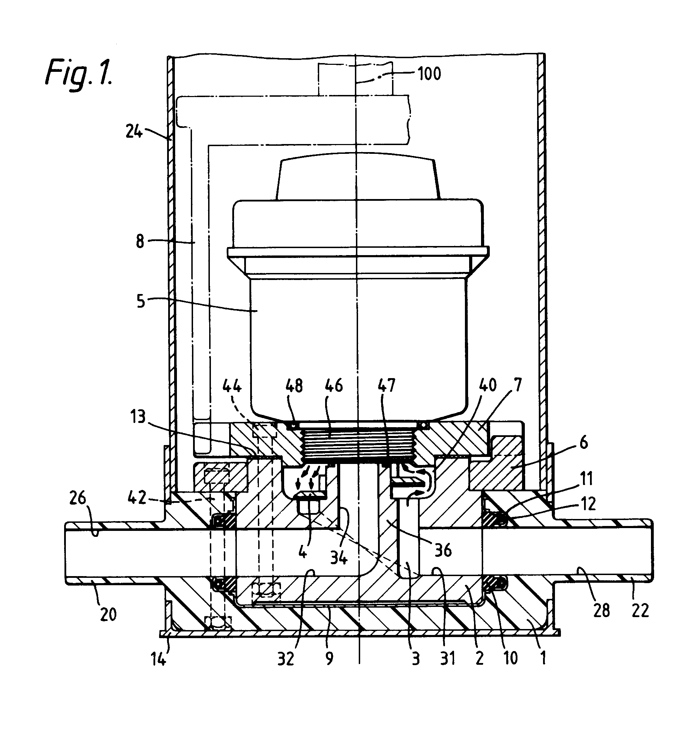

Referring to Figure 1, a combined cut-off valve and flow metering installation comprises a valve body 1, moulded in a plastics material such as polyethylene and which has, projecting horizontally therefrom and substantially in alignment with one another, tubular outlet and inlet pipe connections 20, 22 respectively. The body 1 is co-axial with, and is carried at the lower end of, a tubular casing or liner 24 extending vertically upwards from the body 1. The body 1 is fitted within a shell or valve box 14, for example of metal, which, at its upper end extends above the valve body and receives the lower end of sleeve 24. The valve box 14 has a radially outwardly projecting flange at its lower end, to assist in retaining the assembly in the ground or in a body of concrete or like medium in which it is set.

In use, the pipe connections 20, 22, are connected with respective pipe line sections (not shown) of a water supply pipe line, said pipe line sections being disposed upstream and downstream of the facility, the pipe line, body 1 and the liner 24 being buried in the ground, the liner 24 extending upwardly to the surface to define a vertical passage or shaft termining in an access opening at the surface and through which, when necessary, a suitable tool, indicated in broken lines at 8, may be passed from the access opening at surface level to open or close the valve and through which a metering facility 5, mounted within the liner 24 on top of the cut off valve, may be read. The inspection and access opening at the surface level is, in conventional manner, normally closed by a removable cover.

In the arrangement shown in Figure 1, the cut off valve is a plug valve, as herein defined, comprising a cylindrical plug 2, of metal or plastics, fitted closely within a co-axial cylindrical cavity in the body 1. The rotary axis 100 of plug 2 is vertical and coincident with the vertical central axis of liner 24. The cylindrical cavity in body 1 within which plug 2 is fitted extends from a lower blind end, forming the bottom of said cavity, upwardly to an upper surface of the body 1 and through which the plug 2 may be inserted during assembly of the valve. The pipe connections 20, 22, have respective bores 26, 28, extending therethrough and opening into the plug cavity in the body 1 in respective ports. Annular seals 10, energised by O-rings 12, are accommodated within complementary recesses defined in the peripheral side wall of the plug cavity and bear sealingly against the cylindrical surface of the plug 2. More particularly, the plug 2 is a close rotating fit within a insert or retainer 9, preferably in the form of a stainless steel can, which defines said cavity in the body 1, which is fixed within the body 1 and around which the body 1 is moulded during manufacture of the valve. The insert 9 provides the recesses within which the seals 10 and O-rings 12 are located.

The plug body 2 has inlet and outlet passages 31 and 32 respectively extending radially therein and terminating in respective ports on the cylindrical surface of the plug 2. In the "open" position of the valve, the passages 31 and 32 are in alignment with and communicate with the passages 28, 26 respectively. The outlet passage 32 extends to the middle of the plug 2 and merges with the lower end of an axial bore 34 which extends upwardly to the upper end of the plug. The passage 34 extends through a co-axial boss 36 formed in the plug and which is encircled by a co-axial annular recess 3, with the lowermost part of which the passage 31 communicates at its radially inner end. An upper portion of the annular recess 3 indicated at 40, extends upwardly as far as the upper surface of the plug 2 and is radially wider than the lower part of the recess 3 and terminates, at its lower end, in upwardly facing annular shoulders on the radially inner and radially outer side of the annular slot defined by the upper end of the lower part of the recess 3. These annular shoulders serve as a valve seat for an annular valve member 4 which is received in the upper portion 40, around the boss 36 and is freely movable vertically between an open position shown to the right in Figure 1 and a closed position shown to the left. The plug 2 is held in place in the body 1 by means of a retaining ring 6 which fits closely around an upper portion, of reduced external diameter, of the plug 2 and bears, by its lower face, on an outwardly facing annular shoulder formed on the plug 2 between this reduced-diameter portion and the main cylindrical portion of the plug. The lower face of the ring 6 also bears upon the upper face of the valve body 1 and the ring 6 is secured to the body 1 by a plurality of bolts, one of which is indicated at 42.

An actuator plate 7 is fixed to the uppermost surface of the plug 2 by bolts 44. The actuator plate has a central aperture, coaxial with the plug 2, which receives, screw-threadedly, an externally screw threaded downwardly projecting stub 46 of a meter 5 which engages the upper end of the boss 36 and is sealed with respect thereto by an O-ring 47. The meter body 5 is sealed with respect to the actuator plate 6 by means of an O-ring 48. The actuator plate 7 is sealed with respect to the plug 2 by a gasket 13. The stub 46 has, in its end face, and an central outlet aperture communicating with the passage 34, and, radially outwardly of said outlet aperture, an inlet aperture or apertures (not shown) communicating with the recess 40,these apertures connecting with respective passages (not shown) within the meter 5 and which, when the valve is open, complete, with the passages 26, 28, 31, 32, 34, a through passage between the pipe connection 22 and the pipe connection 20.

When the cut-off valve is in its open position, the incoming water from the main supply flows into the plug where it is redirected via the annular recess 3 through 90°. The pressure of the water forces the non-return valve 4 open allowing water through and into the metering device 5. From the metering device the water returns into the plug, passing through passages 34 and 32 in the plug and through passage 26 and the pipe line section connected with pipe connection 20, to the domestic or commercial premises supplied via the valve.

When the flow of water ceases the back pressure of water from the domestic or commercial premise forces the non-return valve to close thus preventing any backflow of water into the mains supply.

When the water supply to the domestic or commercial premises is to be turned off this is accomplished by the use of an operating key 8 which is located on the actuator plate 7 and by which the plug 2 can be rotated about its vertical axis so that the passages through the body 1 and the plug 2 are out of register with one another to prevent the flow of fluid through the valve.

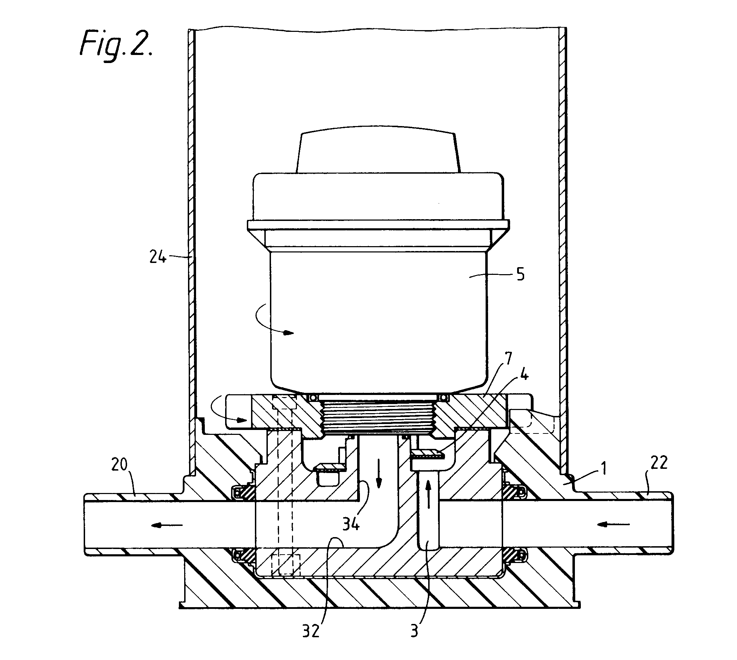

The arrangement illustrated in Figure 2 is similar to that of Figure 1, except that instead of a separately formed body 1 and valve box 14 being provided, the two components are effectively combined in a single polyethylene moulding fitted to the lower end of the sleeve 24. Furthermore, instead of a separately formed retain-ing ring 6 being provided, the valve body is provided with an integral retaining formation. In this arrangement, the valve body may, in manufacture, be moulded in situ around the plug 1 and can 9, in a manner known per se, or the valve body may be so dimensioned as to allow the plug to be inserted into its cavity after the body 1 has been formed and to "snap-fit" into place when forced axially into the cavity.

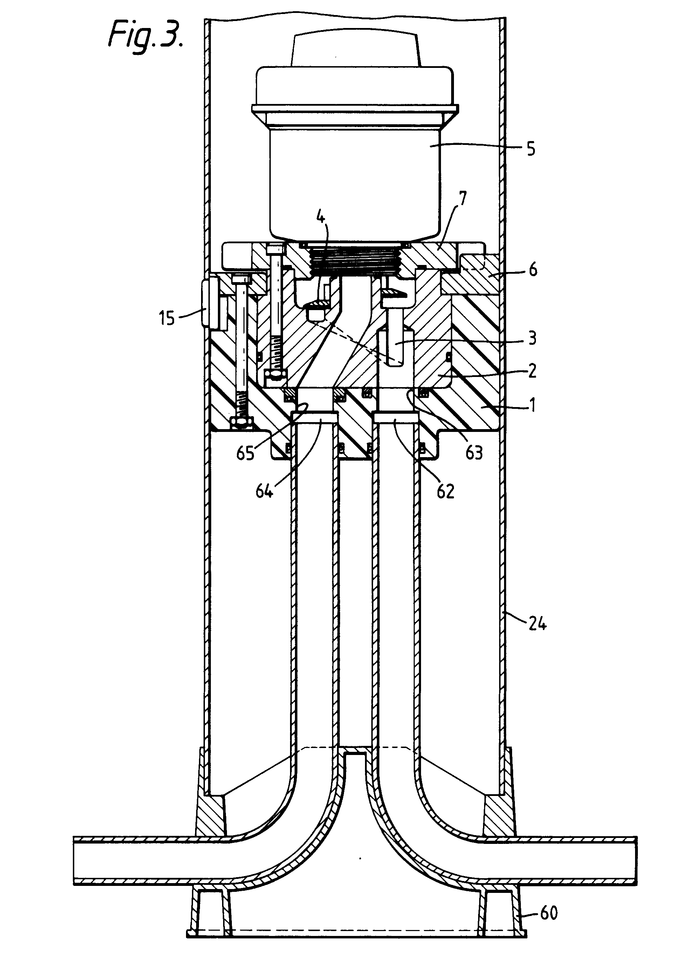

In the variant of Figure 3, the pipe line sections which connect with the valve pass horizontally through respective openings provided in a base member 60 fitted to the lower end of the sleeve 24, then curve upwardly to pass, within the sleeve 24, parallel with the axis of the latter, and fit sealingly, at their ends, into respective recesses 62, 64, provided at the lower end of a valve body 1 fitted within the sleeve 24. The valve body 1 is retained in place in the sleeve 24 by projections 15 engaging in respective apertures formed in the wall of the sleeve 24. In this arrangement, the recesses 62, 64, communicate with respective bores 63, 65,likewise extending parallel with the vertical axis of the assembly, upwardly to respective ports formed in the bottom of the plug cavity in the valve body. The plug 2 in this embodiment is generally similar to that in Figures 1 and 2 except that the radially extending passages 31 and 32 are omitted and the plug, instead, has respective ports in its bottom face communicating, via respective upwardly extending passages, with the annular recess 3 and the central passage 34. Annular seals 10, energised by O-rings are located in annular recesses or counter-bores in the bottom of the plug cavity, around the respective bores 63, 65.

The open position of the valve is shown in Figure 3. When the plug 2 is rotated through 90° about its vertical axis, from the position shown, both the passages in the plug are out of register with the respective passages 63, 65, thus blocking off flow through the valve. It will be appreciated that this arrangement allows the valve and the meter 5 to be placed at any desired position with respect to ground level, regardless of the depth of the horizontal sections of the pipe line.

It will be understood by those skilled in the art that the provision of the can-like retainer or insert 9 of Figure 1 is optional. Thus, Figure 3 shows an arrangement in which such insert or retainer is dispensed with.

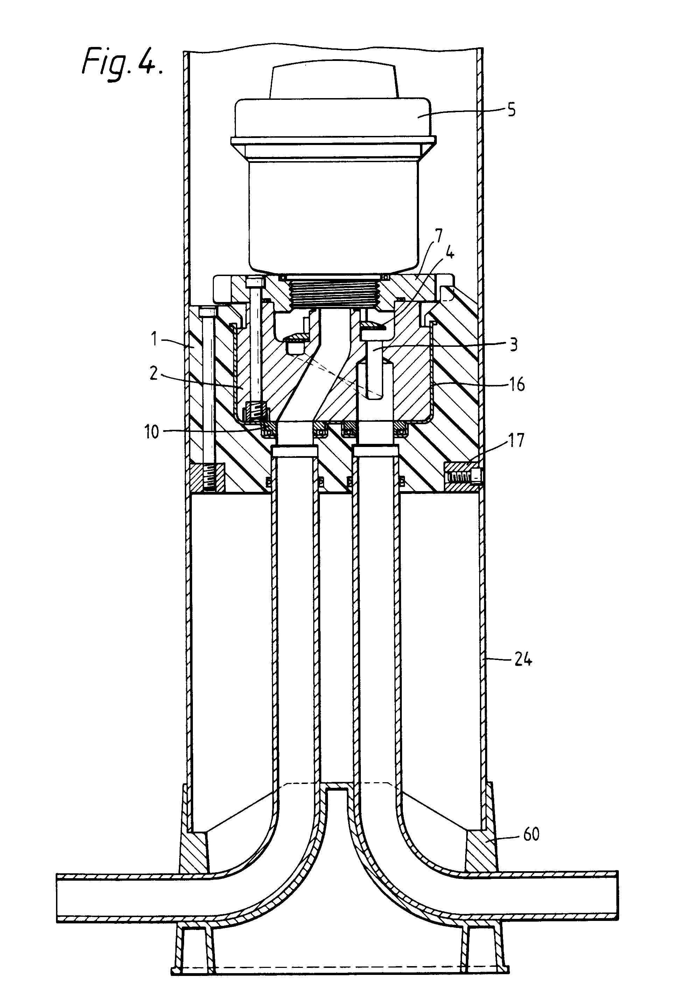

Figure 4 illustrates a variant of the arrangement of Figure 3 in which, in a manner analogous with the arrangement of Figure 1, the plug cavity within the valve body is defined by a metal (e.g. stainless steel) can 16 around which the body is moulded and which locates the annular seals 10 cooperating with the underface of the plug. In this arrangement, furthermore, the valve body 1 is located in the sleeve 24 by means of screws extended radially through the wall of sleeve 24 into a ring 17 fitted within the sleeve 24 and to which the valve body 1 is bolted.

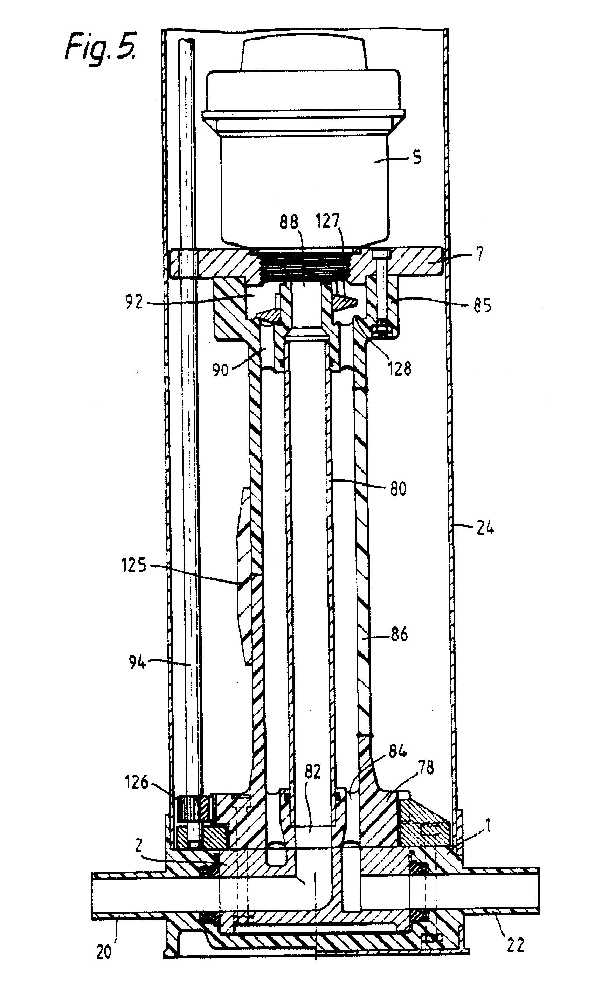

The arrangement of Figure 5 is in many respects similar to that of Figure 1, except that the plug 2 terminates in a flat upper face onto which the central passage 34 and recess 3 open, the plug being surmounted by a pillar which carries at its upper end a structure similar in configuration to the upper part of the plug 2 in Figure 1 and which accommodates a one-way valve similar to valve 4 and which similarly carries a plate 7 and a meter 5. The pillar comprises a lower moulded plastics part 78 sealingly secured to the upper face of the plug body 2 and providing a central passage 82 communicating with the passage 34 in the plug and peripheral passages 84 communicating with the recess 3. The pillar structure, over the major part of its length comprises an outer tubular body 86 and an inner, coaxial, separately formed tube 80, the interior of which communicates sealingly with the passage 82. The annular space defined between the tube 80 and the outer body 86 communicates with the ports 84. Said structure at the upper end of the pillar comprises an upper moulded plastics part 85 which provides a central passage 88 receiving the upper end of tube 80 and communicating sealingly with the interior of the tube 80 and peripheral passages 90 which communicate on the one hand with the annular space between tube 80 and body 86 and on the other hand with an annular recess 92 in the part 85 which opens onto the upper surface of the part 85. The upper portion of the part 85 is configured similarly to the upper portion of the plug 2 in Figure 1 and carries, in an identical manner, a plate 7 which similarly carries an identically configured meter 5. Thus the body 85 provides an upwardly open annular recess which communicates with the inlet ports of the meter 5 and which is co-axial with, and encircles, a central axially extending boss through which the passage 88 extends and which, at its upper end, sealingly engages the face of the meter stub 46. The recess 92, like the recess 3 in Figure 1 accommodates an annular valve member, referenced 127 in Figure 5, of a one-way valve, the valve member 127 corresponding with the valve member 4 in Figure 1. The annular valve member 127 has a frusto-conical lower face which cooperates with a frusto-conical valve seat 128 onto which the passages 90 open. As with the valve member 4 in Figures 1 to 4, the valve member 127 is shown in its open position to the left of the vertical axis of the valve in Figure 5 and in its closed position to the right of that vertical axis. In the arrangement of Figure 5, the lower body 78 provides, on its periphery, gear teeth which are engaged by a gear 126 fixed to a shaft 94 which passes vertically within the sleeve 24, adjacent the wall thereof and through an arcuate slot provided in the plate 7. By rotating the shaft 94, the gear 126, meshing with the gear teeth on the body 78, is caused to rotate the body 78 and thus to rotate the plug 2 between its open and closed positions, the meter 5, plate 7 and pillar rotating with the valve body.

The outer tubular body 86 may be formed by respective tubular parts of the upper and lower moulded bodies 85, 78 fitted end to end and secured together by an electrofusion sleeve 125, known per se, receiving the free ends of said tubular parts, as shown to the left in Figure 5. Alternatively, as shown to the right in Figure 5, the body 86 may comprise a unitary length of plastics pipe butt welded at its upper and lower ends to respective tubular stubs of the members 85, 78.

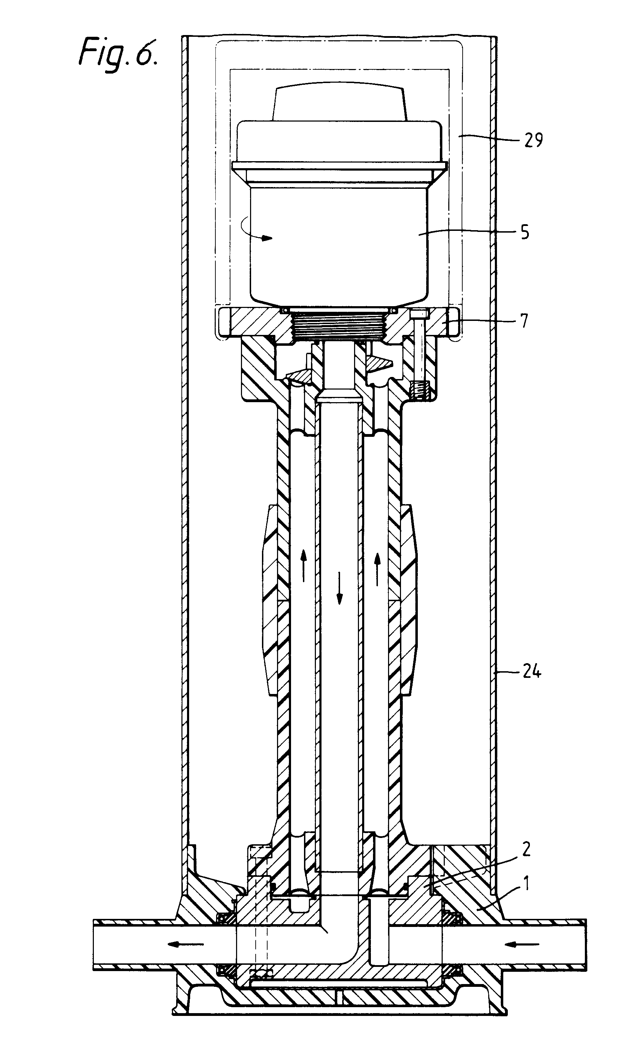

The arrangement of Figure 6 differs from that of Figure 5 principally in that the valve plug 2 is arranged to be rotated directly through the pillar structure by using a key 29 which straddles the flow meter 5 and acts upon the meter support plate 7 similarly to the arrangement of Figure 1. A further difference is that the plug 2 is fully retained In the body 1 as in Figure 2.

Figures 5 and 6 illustrate variations on a theme. The arrangements of these Figures all concentrate on positioning the flow meter 5 nearer to ground level through the use of an extension pillar. These pillars can, as indicated above, be manufactured using various techniques e.g. butt fusion welding (24) or electro-fusion welding (25). Figure 5 additionally shows the use of a gear drive 126 which is used to rotate the column which in turn rotates the plug 2 such that the passage through the body 1 and the plug 2 are out of register with one another to prevent the flow of fluid through the valve. Figure 5, like Figures 1 and 3 depicts a valve which can be dismantled, and is held together by bolts engaging threaded nuts which are held captive within the body 1 to retain them against rotation. Figure 6 is a variation of Figure 5.

**Claims**

1. A combined cut-off valve and flow metering facility for a water supply comprising a valve (1, 2,) a water meter (5) and an outer casing (24) adapted to be buried in the ground to extend to a surface location, the casing having an opening at its upper end, the valve including a valve body (1) fixed with respect to the casing and the water meter (5) being mounted within the casing (24) and being so arranged as to be capable of being read from the upper end of the casing through said opening, characterised in that said valve is a plug valve comprising a plug (2) rotatable about an axis (100) thereof as a close sealing fit in a cavity in a body (1) encompassing the plug (2), the body providing at least one inlet passage (28) and at least one outlet passage (26) opening via respective ports into the cavity of the body (2) which receives the plug (2) and the plug (2) having respective ports connected with respective internal passages (31, 32) in the plug (2), the arrangement being such that in one rotational position of the plug in the body, the ports in the plug are in register with the corresponding ports in the cavity in the valve body so that the inlet (28) and outlet (26) passages in the body are in communication with the respective internal passages (31, 32) in the plug, and that, in another position of the plug in the body, at least one of said ports in the plug is out of communication with either of said ports in said cavity, thereby to prevent fluid flow through the valve and further characterised in that the water meter (5) is mounted on top of the plug (2) and is secured to the plug to be rotatable therewith, said ports in the plug (2) being connected with respective internal passages (31, 32) in the plug which connect with inlet and outlet passages respectively of said water meter.

2. A combined cut-off valve and flow-metering facility according to claim 1 incorporating a one-way valve (4) whereby, in an open state of the cut-off valve, water can flow therethrough only *via* said one-way valve, and hence only in one direction, whereas in a closed state of the cut-off valve, water cannot flow therethrough in either direction.

3. A combined cut-off valve and water metering facility according to claim 1, and adapted to be connected in an underground pipe having an upstream branch extending to the apparatus and a downstream branch extending from the apparatus at substantially the same level, said casing having a base portion (60) adapted to be disposed at substantially the same level as said upstream and downstream branches for connection thereto and an outer sleeve (24) extending upwardly from said base portion to a surface location, the apparatus including structure rising from said base portion upwardly within said sleeve and carrying, at its upper end, said valve (1,2) and said water meter (5), said structure including internal passageways for conducting water, within said sleeve, from such upstream branch to said valve and meter and from said valve and meter to said downstream branch.

4. A combined cut-off valve and water metering facility according to claim 1, and adapted to be connected in an underground pipe having an upstream branch (22) extending to the apparatus and a downstream branch (20) extending from the apparatus at substantially the same level, said casing having a base portion adapted to be disposed at substantially the same level as said upstream and downstream branches for connection thereto and an outer sleeve (24) extending upwardly from said base portion to a surface location, the plug valve (1, 2) being disposed directly adjacent said base and the water meter (5) being mounted at the upper end of a structure (78, 85, 86) fixed to the valve plug (2) to rotate therewith and rising from said plug (2) upwardly within said sleeve (24), said structure including internal passageways (80, 82, 84, 90) for conducting water, within said sleeve (24), from valve (1, 2) to said meter (5) and from said meter (5) to said valve (1, 2).

**Patentansprüche**

1. Kombinierte Absperrventil- und Durchflußmeßeinrichtung für eine Wasserversorgung mit einem Ventil (1, 2), einem Wasserzähler (5) und einem äußeren Gehäuse (24), dazu bestimmt, in den Boden eingegraben zu werden und bis zu einer Stelle an der Oberfläche zu reichen, wobei das Gehäuse an seinem oberen Ende eine Öffnung hat, das Ventil einen bezüglich dem Gehäuse fixierten Ventilkörper (1) einschließt und der Wasserzähler (5) innerhalb des Gehäuses (24) befestigt und so angeordnet ist, daß er vom oberen Ende des Gehäuses durch die besagte Öffnung abgelesen werden kann, dadurch gekennzeichnet, daß besagtes Ventil ein Kükenventil mit einem um eine Achse (110) davon drehbaren Küken (2) als eng dichtende Passung in einem Hohlraum in einem das Küken umfassenden Körper (1) ist, wobei der Körper mindestens einen Einlaßdurchlaß (28) und mindestens einen Auslaßdurchlaß (26) hat, die über Öffnungen in den Hohlraum des Körpers (2) münden, der das Küken (2) aufnimmt, und das Küken (2) Öffnungen hat, die mit inneren Durchlässen (31, 32) im Küken (2) verbunden sind, wobei die Anordnung so ist, daß in einer Drehstellung des Kükens im Körper die Öffnungen im Küken mit den entsprechenden Öffnungen im Hohlraum des Ventilkörpers zur Deckung kommen, so daß die Einlaß- (21) und Auslaßöffnungen (26) in dem Körper in Verbindung mit den inneren Durchlässen (31, 32) im Küken stehen, und daß, in einer anderen Stellung des Kükens im Körper, wenigstens eine der besagten Öffnungen im Küken nicht mit einer der besagten Öffnungen im besagten Hohlraum in Verbindung steht, wodurch eine Strömung durch das Ventil verhindert wird, und weiter dadurch gekennzeichnet, daß der Wasserzähler (5) oben auf dem Küken (2) montiert und am Küken befestigt ist, um damit drehbar zu sein, und besagte Öffnungen im Küken (2) mit den inneren Durchlässen (31, 32) im Küken verbunden sind, welche Einlaß- und Auslaßdurchlaß des besagten Wasserzählers verbinden.

2. Kombinierte Absperrventil- und Durchflußmeßeinrichtung nach Anspruch 1, gekennzeichnet durch ein Rückschlagventil (4), wodurch im offenen Zustand des Absperrventils Wasser nur über das Rückschlagventil durchfließen kann, und daher nur in einer Richtung, wogegen im geschlossenen Zustand des Absperrventils Wasser in keine Richtung durchfließen kann.

3. Kombinierte Absperrventil- und Durchflußmeßeinrichtung nach Anspruch 1, dazu bestimmt, mit einer unterirdischen Leitung verbunden zu werden, mit einem stromauf liegenden Zweig, der sich zu der Vorrichtung hin erstreckt, und einem stromab liegenden Zweig, der sich von der Vorrichtung aus in im wesentlichen gleicher Höhe erstreckt, wobei das besagte Gehäuse einen Grundteil (60) hat, dazu bestimmt, auf im wesentlichen gleicher Höhe wie die besagten stromauf und stromab liegenden Zweige zur Verbindung damit angeordnet zu werden, und mit einer äußeren Hülse (24), die sich von dem besagten Grundteil bis zu einer Stelle an der Erdoberfläche erstreckt, wobei die Vorrichtung einen Aufbau einschließt, der von dem besagten Grundteil innerhalb der besagten Hülse nach oben geht und an seinem oberen Ende besagtes Ventil (1, 2) und besagten Wasserzähler (5) trägt, wobei der besagte Aufbau innere Duchlässe zum Leiten von Wasser einschließt, innerhalb der besagten Hülse, von diesem stromauf liegenden Zweig zu besagtem Ventil und Zähler und von besagten Ventil und Zähler zu besagtem stromab liegenden Zweig.

4. Kombinierte Absperrventil- Durchflußmeßeinrichtung entsprechend Anspruch 1, dazu bestimmt, mit einer unterirdischen Leitung verbunden zu werden, mit einem stromauf liegenden Zweig (22), der sich zu der Vorrichtung hin erstreckt, und einem stromab liegenden Zweig (20), der sich von der Vorrichtung aus in im wesentlichen gleicher Höhe erstreckt, wobei das besagte Gehäuse einen Grundteil hat, dazu bestimmt, auf im wesentlichen gleicher Höhe wie die besagten stromauf und stromab liegenden Zweige zur Verbindung damit angeordnet zu werden, und mit einer äußeren Hülse (24), die sich von dem besagten Grundteil bis zu einer Stelle an der Erdoberfläche erstreckt, wobei das Ventilküken (1, 2) unmittelbar neben besagtem Grundteil angeordnet ist und der Wasserzähler (5) am oberen Ende eines Aufbaus (78, 85, 86) montiert ist, der am Hahnküken (2) befestigt ist, um sich damit zu drehen und der von besagtem Küken (2) innerhalb besagter Hülse (24) nach oben geht, wobei der besagte Aufbau innere Durchlässe (80, 82, 84, 90) zum Leiten von Wasser einschließt, innerhalb der besagten Hülse (24), vom Ventil (1, 2) zu besagtem Zähler (5) und von besagtem Zähler (5) zu besagtem Ventil (1, 2).

## Revendications

1. Système combiné de vanne d'arrêt et de compteur pour une adduction d'eau, comportant une vanne (1, 2), un compteur (5) d'eau et un boîtier extérieur (24) conçus pour être enterrés dans le sol de manière à s'étendre juaqu'à un emplacement en surface, le boîtier ayant une ouverture à son extrémité supérieure, la vanne comportant un corps (1) de vanne fixe par rapport au boîtier et le compteur (5) d'eau étant monté à l'intérieur du boîtier (24) et étant agencé de manière à pouvoir être lu depuis l'extrémité supérieure du boîtier à travers ladite ouverture, caractérisé en ce que ladite vanne est une vanne à boisseau comportant un boisseau (2) pouvant tourner autour d'un axe (100) de celui-ci et disposé d'une manière étanche et avec un ajustement sans jeu dans une cavité d'un corps (1) entourant le boisseau (2), le corps présentant au moins un passage (28) d'entrée et au moins un passage (26) de sortie débouchant, via des orifices respectifs, dans la cavité du corps (1) qui reçoit le boisseau (2), le boisseau (2) ayant des orifices respectifs reliés à des passages internes respectifs (31, 32) ménagés dans le boisseau (2), l'agencement étant tel que dans une première position de rotation du boisseau dans le corps, les orifices du boisseau coïncident avec les orifices correspondants de la cavité du corps de la vanne de façon que les passages d'entrée (28) et de sortie (26) du corps communiquent avec les passages internes respectifs (31, 32) du boisseau, et que, dans une autre position du boisseau dans le corps, au moins un desdits orifices du boisseau ne communique avec aucun desdits orifices présents dans ladite cavité, ce qui empêche tout écoulement de fluide à travers la vanne, et caractérisé en outre en ce que le compteur (5) d'eau est monté sur le dessus du boisseau (2) et est fixé au boisseau de façon à pouvoir tourner avec celui-ci, lesdits orifices du boisseau (2) étant reliés à des passages internes respectifs (31, 32) du boisseau qui établissent respectivement une liaison avec des passages d'entrée et de sortie dudit compteur d'eau.

2. Système combiné de vanne d'arrêt et de compteur selon la revendication 1, comportant une soupape unidirectionnelle (4) grâce à quoi, lorsque la vanne d'arrêt est dans sa position ouverte, de l'eau peut passer à travers celle-ci uniquement via ladite soupape unidirectionnelle, et donc dans un seul sens, alors que lorsque la vanne d'arrêt est dans sa position fermée, l'eau ne petit circuler à travers celle-ci ni dans un sens ni dans l'autre.

3. Système combiné de vanne d'arrêt et de compteur selon la revendication 1, et conçu pour être branché sur une canalisation souterraine ayant une ramification amont et s'étendant jusqu'au dispositif et une ramification orientée vers l'aval et s'étendant depuis le dispositif sensiblement au même niveau, ledit boîtier ayant une partie formant base (60) conçue pour être disposée sensiblement au même niveau que lesdites ramifications amont et aval pour être reliée à celles-ci, et un manchon extérieur 24 s'étendant vers le haut depuis ladite portion formant base jusqu'à un emplacement en surface, l'appareil comportant une structure s'élevant depuis ladite partie formant base vers le haut à l'intérieur dudit manchon et portant à son extrémité supérieure ladite vanne (1, 2) et ledit compteur (5) d'eau, ladite structure comportant des passages intérieurs pour acheminer de l'eau, à l'intérieur dudit manchon, depuis ladite ramification amont jusqu'auxdits vanne et compteur et depuis lesdits vanne et compteur jusqu'à ladite ramification avale.

4. Système combiné de vanne d'arrêt et de compteur selon la revendication 1, conçu pour être monté sur une canalisation souterraine ayant une ramification amont (22) s'étendant jusqu'au dispositif et une ramification aval (20) s'étendant depuis le dispositif sensiblement au même niveau, ledit boîtier ayant une partie formant base conçue pour être disposée sensiblement au même niveau que lesdites ramifications amont et aval pour être raccordée à celles-ci, et un manchon extérieur (24) s'étendent vers le haut depuis ladite partie formant base jusqu'à un emplacement en surface, la vanne à boisseau (1, 2) étant disposée au voisinage immédiat de ladite base et le compteur (5) d'eau étant monté à l'extrémité supérieure d'une structure (78, 85, 86), fixée au boisseau (2) de la vanne, pour tourner avec celui-ci et s'élevant vers le haut depuis ledit boisseau (2) à l'intérieur dudit manchon (24) ladite structure comportant des passages internes (80, 82, 84, 90) pour acheminer de l'eau, à l'intérieur dudit manchon (24) depuis la vanne (1, 2) jusqu'audit compteur (5) et depuis ledit compteur (5) jusqu'à ladite vanne (1, 2).

Fig. 1.

Fig.2.

Fig.3.

Fig.4.

Fig.5.

Fig.6.